# EUROPÄISCHE PATENTSCHRIFT

(11) **EP 0 842 967 B1**
(45) Veröffentlichungstag und Bekanntmachung des Hinweises auf die Patenterteilung: **20.09.2000**
(21) Anmeldenummer: 97120034.0
(22) Anmeldetag: 14.11.1997
(51) Int. Cl.: C08G 83/00, C08K 9/06

(54) **Verbundwerkstoffe**
Composite materials
Materiaux composites

(30) Priorität: 15.11.1996 DE 19647369
(43) Veröffentlichungstag der Anmeldung: 20.05.1998
(73) Patentinhaber: Institut Für Neue Materialien gem. GmbH, 66123 Saarbrücken (DE); Pfleiderer Dämmstofftechnik International GmbH & Co., 92318 Neumarkt/Opf. (DE)
(72) Erfinder: Jonschker, Gerhard, 66583 Spiesen-Elversberg (DE); Mennig, Martin, 66287 Quierschied (DE); Schmidt, Helmut, 66130 Saarbrücken-Güdingen (DE); Angenendt, Rainer, 46509 Xanten (DE)
(74) Vertreter: Barz, Peter, Dr.

(56) Entgegenhaltungen:
- EP-A- 0 263 428
- WO-A-97/11035
- DE-A- 4 338 360

## Beschreibung

Die Erfindung betrifft Verbundwerkstoffe, die gekennzeichnet sind durch ein Substrat auf Basis von Glasfasern, Mineralfasern oder Holzwerkstoffen und ein damit in funktionellem Kontakt stehendes Nanokomposit, das erhältlich ist durch Oberflächenmodifizierung von
a) kolloidalen anorganischen Partikeln mit
b) einem oder mehreren Silanen der allgemeinen Formel (I)

   Rₓ-Si-A₄₋ₓ (I)

   worin die Reste A gleich oder verschieden sind und Hydroxylgruppen oder hydrolytisch abspaltbare Gruppen darstellen, ausgenommen Methoxy, die Reste R gleich oder verschieden sind und hydrolytisch nicht abspaltbare Gruppen darstellen und x den Wert 0, 1, 2 oder 3 hat, wobei bei mindestens 50 Stoffmengen-% der Silane x ≥ 1 ist;
unter den Bedingungen des Sol-Gel-Prozesses mit einer unterstöchiometrischen Wassermenge, bezogen auf die vorhandenen hydrolysierbaren Gruppen, unter Bildung eines Nanokomposit-Sols, gegebenenfalls weitere Hydrolyse und Kondensation des Nanokomposit-Sols vor dem Inkontaktbringen mit dem Substrat und anschließende Härtung.

Das Substrat kann verschiedene physikalische Form aufweisen, und auch das Nanokomposit kann in unterschiedlichen Verteilungsformen vorliegen. Beispielsweise kann das Nanokomposit als kontinuierliche Beschichtung oder Überzug das Substrat ganz oder teilweise bedecken oder laminatartig zwischen mehreren Substraten vorliegen. Spezielle Beispiele für Verbundwerkstoffe dieser Art sind mit einer temperaturbeständigen Imprägnierung versehene Fasern, Zwirne, Garne und Halbzeuge wie Gewebe, Gewirke, Gestricke und Geflechte.

Alternativ kann das Nanokomposit diskontinuierliche oder auch punktförmige Kontaktstellen zwischen mehreren Substraten bilden und z.B. matrixartig ein teilchen-, flocken- oder faserförmiges Substrat verbinden. Spezielle Beispiele für Verbundwerkstoffe der letztgenannten Art sind Dämmstoffe auf Basis von Glas- oder Mineralfasern und Holzmaterialien wie Holzfaserplatten, Holzspanplatten, Tischlerplatten, Sperrholz und Holzwolle-Leichtbauplatten. Für besondere Zwecke können auch Gemische aus Glasfasern und Holzmaterialien angewandt werden, z.B. für Spanplatten mit flammhemmenden Eigenschaften.

Beispiele für geeignete Substrate sind Glasfasern, natürliche oder künstliche Mineralfasern wie Asbest, Gesteinsfasern, Schlackenfasern, und Fasern aus Keramikmateralien, einschließlich solchen aus Oxidkeramik; Holzmaterialien in Form von Zellstoff, Holzwolle, Holzmehl, Holzspänen, Papier, Karton, Holzplatten, -leisten und -laminaten.

Unter faserförmigen Substraten werden sowohl Einzelfasern, einschließlich Hohlfasern und Whisker, als auch entsprechende Faserbündel, Schnüre, Taue, Zwirne und Garne sowie Halbzeuge wie Gewebe, Gewirke, Gestricke, Geflechte, Textilien, Filze, Vliesstoffe, Bahnen, Platten und Matten verstanden. Konkrete Beispiele hierfür sind Glaswolle, Glasfasermatten und Mineralwolle, z.B. Schlacken-, Hütten-, Stein- und Basaltwolle.

Das erfindungsgemäß eingesetzte Nanokomposit wird hergestellt durch Oberflächenmodifizierung von kolloidalen anorganischen Partikeln (a) mit einem oder mehreren Silanen (b) gegebenenfalls in Gegenwart von anderen Zusatzstoffen (c) unter den Bedingungen des Sol-Gel-Prozesses.

Einzelheiten des Sol-Gel-Prozesses sind bei C.J. Brinker, G.W. Scherer: "Sol-Gel Science - The Physics and Chemistry of Sol-Gel-Processing", Academic Press, Boston, San Diego, New York, Sydney (1990) und in den DE 1941191, DE 3719339, DE 4020316 und DE 4217432 beschrieben.

Dort sind auch spezielle Beispiele für die erfindungsgemäß einsetzbaren Silane (b) sowie deren hydrolytisch abspaltbare Reste A und hydrolytisch nicht abspaltbare Reste R angegeben.

Bevorzugte Beispiele für hydrolytisch abspaltbare Gruppen A sind Wasserstoff, Halogen (F, Cl, Br und I, insbesondere Cl und Br), Alkoxy (insbesondere C₂₋₄-Alkoxy, wie z.B. Ethoxy, n-Propoxy, i-Propoxy und Butoxy), Aryloxy (insbesondere C₆₋₁₀-Aryloxy, z.B. Phenoxy), Alkaryloxy (z.B. Benzyloxy), Acyloxy (insbesondere C₁₋₄-Acyloxy, wie z.B. Acetoxy und Propionyloxy) und Alkylcarbonyl (z.B. Acetyl). Ebenfalls geeignete Reste A sind Aminogruppen (z.B. Mono- oder Dialkyl-, -aryl- und -aralkylamingruppen mit den oben genannten Alkyl-, Aryl- und Aralkylresten), Amidgruppen (z.B. Benzamido) und Aldoxim- oder Ketoximgruppen. Zwei oder drei Reste A können zusammen auch eine das Si-Atom komplexierende Gruppierung bilden, wie dies z.B. bei Si-Polyolkomplexen der Fall ist, die sich von Glykol, Glycerin oder Brenzkatechin ableiten. Besonders bevorzugte Reste A sind C₂₋₄-Alkoxygruppen, insbesondere Ethoxy. Methoxygruppen sind für die Zwecke der Erfindung weniger geeignet, da sie zu hohe Reaktivität aufweisen (kurze Verarbeitungszeit des Nanokomposit-Sols) und zu Nanokompositen bzw. Verbundmaterialien mit ungenügender Flexibilität führen können.

Die genannten hydrolysierbaren Gruppen A können gegebenenfalls einen oder mehrere übliche Substituenten tragen, z.B. Halogenatome oder Alkoxygruppen.

Die hydrolytisch nicht abspaltbaren Reste R sind vorzugsweise ausgewählt aus Alkyl (insbesondere C₁₋₄-Alkyl, wie z.B. Methyl, Ethyl, Propyl und Butyl), Alkenyl (insbesondere C₂₋₄-Alkenyl, wie z.B. Vinyl, 1-Propenyl, 2-Propenyl und Butenyl), Alkinyl (insbesondere C₂₋₄-Alkinyl, wie Acetylenyl und Propargyl), Aryl (insbesondere C₆₋₁₀-Aryl, wie z.B. Phenyl und Naphthyl) und den entsprechenden Alkaryl- und Arylalkylgruppen. Auch diese Gruppen können gegebenenfalls einen oder mehrere übliche Substituenten, z.B. Halogen-, Alkoxy-, Hydroxy-, Amino- oder Epoxidgruppen, aufweisen.

Die oben genannten Alkyl-, Alkenyl- und Alkinylgruppen schließen die entsprechenden cyclischen Reste, wie z.B. Cyclopropyl, Cyclopentyl und Cyclohexyl, ein.

Besonders bevorzugte Reste R sind gegebenenfalls substituierte C₁₋₄-Alkylgruppen, insbesondere Methyl und Ethyl, und gegebenenfalls substituierte C₆₋₁₀-Alkylgruppen, insbesondere Phenyl.

Weiter ist es bevorzugt, daß in der obigen Formel (I) x den Wert 0, 1 oder 2, und besonders bevorzugt 0 oder 1, aufweist. Ferner weisen vorzugsweise mindestens 60 und insbesondere mindestens 70 Stoffmengen-% der Silane der Formel (I) einen Wert X ≥ 1, vorzugsweise den Wert x = 1, auf. In bestimmten Fällen kann es noch günstiger sein, wenn mehr als 80 oder sogar mehr als 90 Stoffmengen-% (z.B. 100%) der Silane der Formel (I) einen Wert X ≥ 1, vorzugsweise den Wert x = 1, aufweisen.

Die erfindungsgemäßen Verbundwerkstoffe können z.B. aus reinem Methyltriethoxysilan (MTEOS) oder aus Mischungen von MTEOS und Tetraethoxysilan (TEOS) als Komponente (b) hergestellt werden.

Konkrete Beispiele für Silane der allgemeinen Formel (I) sind Verbindungen der folgenden Formeln:
Si(OC₂H₅)₄, Si(O-n- oder i-C₃H₇)₄-Si(OC₄H₉)₄, SiCl₄, Si(OOCCH₃)₄, CH₃-SiCl₃, CH₃-Si(OC₂H₅)₃, C₂H₅-SiCl₃, C₂H₅-Si(OC₂H₅)₃, C₃H₇-Si(OC₂H₅)₃, C₆H₅-Si-(OC₂H₅)₃, C₆H₅-Si(OC₂H₅)₃, (C₂H₅O)₃-Si-C₃H₆-Cl,(CH₃)₂SiCl₂, (CH₃)₂Si(OC₂H₅)₂, (CH₃)₂Si-(OC₂H₅)₂, (CH₃)₂Si(OH)₂, (C₆H₅)₂SiCl₂, (C₆H₅)₂Si(OC₂H₅)₂, (C₆H₅)₂Si(OC₂H₅)₂, (i-C₃H₇)₃SiOH, CH₂=CH-Si(OOCCH₃)₃, CH₂=CH-SiCl₃, CH₂=CH-Si(OC₂H₅)₃, CH₂=CHSi(OC₂H₅)₃, HSiCl₃, CH₂=CH-Si(OC₂H₄OCH₃)₃, CH₂=CH-CH₂-Si(OC₂H₅)₃, CH₂=CH-CH₂-Si(OC₂H₅)₃, CH₂=CH-CH₂-Si(OOCCH₃)₃, CH₂=C(CH₃)COO-C₃H₇-Si-(OC₂H₅)₃, CH₂=C(CH₃)-COO-C₃H₇-Si(OC₂H₅)₃, n-C₆H₁₃-CH₂-CH₂-Si(OC₂H₅)₃, n-C₈H₁₇-CH₂-CH₂-Si(OC₂H₅)₃, (C₂H₅O)₃Si-(CH₂)₃-O-CH₂

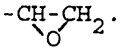

Diese Silane lassen sich nach bekannten Methoden herstellen; vgl. W. Noll, "Chemie und Technologie der Silicone", Verlag Chemie GmbH, Weinheim/Bergstraße (1968).

Bezogen auf die oben genannten Komponenten (a), (b) und (c) beträgt der Anteil der Komponente (b) gewöhnlich 20 bis 95, vorzugsweise 40 bis 90 und besonders bevorzugt 70 bis 90 Masse-%, ausgedrückt als Polysiloxan der Formel: RₓSiO_{(2-0,5x)}, welches bei der Kondensation entsteht.

Die erfindungsgemäß verwendeten Silane der allgemeinen Formel (I) können ganz oder teilweise in Form von Vorkondensaten eingesetzt werden, d.h. Verbindungen, die durch teilweise Hydrolyse der Silane der Formel (I), entweder allein oder im Gemisch mit anderen hydrolysierbaren Verbindungen, entstanden sind. Derartige, im Reaktionsmedium vorzugsweise lösliche Oligomere können geradkettige oder cyclische niedermolekulare Teilkondensate (Polyorganosiloxane) mit einem Kondensationsgrad von z.B. etwa 2 bis 100, insbesondere etwa 2 bis 6, sein.

Die zur Hydrolyse und Kondensation der Silane der Formel (I) eingesetzte Wassermenge beträgt vorzugsweise 0,1 bis 0,9, und besonders bevorzugt 0,25 bis 0,75 Mol Wasser pro Mol der vorhandenen hydrolysierbaren Gruppen. Oft werden besonders gute Ergebnisse mit 0,35 bis 0,45 Mol Wasser pro Mol der vorhandenen hydrolysierbaren Gruppen erzielt.

Spezielle Beispiele für kolloidale anorganische Partikel (a) sind Sole und nanoskalige dispergierbare Pulver (Teilchengröße vorzugsweise bis zu 300, insbesondere bis zu 100 nm und besonders bevorzugt bis zu 50 nm) von SiO₂, TiO₂, ZrO₂, Al₂O₃, Y₂O₃, CeO₂, SnO₂, ZnO, Eisenoxiden oder Kohlenstoff (Ruß und Graphit), insbesondere von SiO₂.

Der Anteil der Komponente (a), bezogen auf die Komponenten (a), (b) und (c), beträgt gewöhnlich 5 bis 60, vorzugsweise 10 bis 40 und besonders bevorzugt 10 bis 20 Masse-%.

Zur Herstellung des Nanokomposits können als Eventualkomponenten (c) andere Zusatzstoffe in Mengen von bis zu 20 Masse%, vorzugsweise bis zu 10 und insbesondere bis zu 5 Masse-% eingesetzt werden, z.B. Härtungskatalysatoren wie Metallsalze und Metallalkoxide (z.B. Aluminium-, Titan-, Zirkonalkoxide), organische Bindemittel wie Polyvinylalkohol, Polyvinylacetat, Stärke, Polyethylenglykol und Gummi arabicum, Pigmente, Farbstoffe, flammhemmende Zusätze, Verbindungen glasbildender Elemente (z.B. Borsäure, Borsäureester, Natriummethylat, Kaliumacetat, Aluminium-sek-butylat, etc.), Korrosionsschutzmittel und Beschichtungshilfsmittel. Die Verwendung von Bindemitteln ist erfindungsgemäß weniger bevorzugt.

Die Hydrolyse und Kondensation wird unter Sol-Gel-Bedingungen in Gegenwart saurer Kondensationskatalysatoren (z.B. Salzsäure) bei einem pH-Wert von vorzugsweise 1 bis 2 durchgeführt, bis ein viskoses Sol entsteht.

Vorzugsweise wird neben dem Lösungsmittel, das bei der Hydrolyse der Alkoxygruppen entsteht, kein zusätzliches Lösungsmittel angewandt. Falls gewünscht, können jedoch z.B. alkoholische Lösungsmittel, wie Ethanol, oder andere polare, protische oder aprotische Lösungsmittel, wie Tetrahydrofuran, Dioxan, Dimethylformamid oder Butylglykol, eingesetzt werden.

Um eine günstige Solpartikel-Morphologie und Sol-Viskosität einzustellen, unterwirft man das erhaltene Nanokomposit-Sol vorzugsweise einem gezielten Nachreaktionsschritt, bei dem die Reaktionsmischung mehrere Stunden bis mehrere Tage auf Temperaturen von 40 bis 120°C erwärmt wird. Besonders bevorzugt ist eine eintägige Lagerung bei Raumtemperatur oder eine mehrstündige Erwärmung auf 60-80°C. Hierbei entsteht ein Nanokomposit-Sol mit einer Viskosität von vorzugsweise 5 bis 500 mPas, besonders bevorzugt 10 bis 50 mPas. Selbstverständlich kann die Viskosität des Sols auch durch Zusatz von Lösungsmitteln oder Entfernung von Reaktions-Nebenprodukten (z.B. Alkoholen) auf für den speziellen Anwendungszweck geeignete Werte eingestellt werden. Der Nachreaktionsschritt kann auch vorzugsweise mit einer Reduktion des Lösungsmittelanteils gekoppelt werden.

Der Masseanteil des Nanokomposits am Verbundwerkstoff beträgt vorzugsweise 0,1 bis 80, insbesondere 1 bis 40 und besonders bevorzugt 1 bis 20 Masse-%.

Die Vereinigung von Substrat und Nanokomposit bzw. Nanokomposit-Sol erfolgt nach einer zumindest anfänglichen Hydrolyse der Komponente (b) und auf jeden Fall vor der abschließenden Härtung. Vorzugsweise wird das Nanokomposit-Sol kurz vor dem Inkontaktbringen mit dem Substrat durch Zufuhr einer weiteren Wassermenge aktiviert.

Das Inkontaktbringen kann auf jede dem Fachmann bekannte und für den gegebenen Fall als sinnvoll erachtete Art und Weise erfolgen, z.B. durch einfaches Vermischen von Substrat und Nanokomposit-Sol, Tauchen, Sprühen, Rakeln, Spritzen, Schleudern, Gießen, Streichen, Bürsten usw. in das bzw. mit dem Nanokomposit-Sol. Um die Haftung zwischen Substrat und Nanokomposit zu verbessern, kann es sich in manchen Fällen als vorteilhaft erweisen, das Substrat vor dem Kontaktieren mit dem Nanokomposit bzw. dessen Vorstufe einer üblichen Oberflächen-Vorbehandlung zu unterziehen, z.B. Korona-Entladung, Entfetten, Behandlung mit Primern wie Aminosilanen, Epoxysilanen, Schlichten aus Stärke oder Siliconen, Komplexbildnern, Tensiden etc.

Der abschließenden Härtung kann eine Trocknungsstufe bei Raumtemperatur oder leicht erhöhter Temperatur (z.B, bis zu ca. 50°C) vorangehen.

Die eigentliche Härtung bzw. eine Vorhärtung kann bei Raumtemperatur durchgeführt werden, erfolgt jedoch vorzugsweise durch Wärmebehandlung bei Temperaturen über 50°C, vorzugsweise über 100°C und besonders bevorzugt bei 150°C oder darüber. Die maximale Härtungstemperatur hängt u.a. vom Schmelzpunkt bzw. der Temperaturbeständigkeit des Substrats ab, liegt aber in der Regel bei 250 bis 300°C. Bei mineralischen Substraten sind auch wesentlich höhere Härtungstemperaturen möglich, z.B. 400 bis 500°C und darüber. Übliche Härtungszeiten liegen im Bereich von Minuten bis Stunden, z.B. 2 bis 30 Minuten.

Neben der konventionellen thermischen Härtung z.B. in einem Umluftofen kommen auch andere Härtungsmethoden in Frage, z.B. die Härtung mit IR-Strahlung. Vor der Härtung kann der hergestellte Verbund gegebenenfalls auch noch einer Formgebung unterzogen werden.

Gegenstand der vorliegenden Erfindung ist auch die Verwendung des obigen Nanokomposits für die Beschichtung und/oder Konsolidierung der obigen Substrate. Der Begriff "Konsolidierung" soll hier alle Maßnahmen einschließen, die geeignet sind, das Substrat in verfestigter bzw. kompaktierter Form bereitzustellen und umfaßt somit z.B. eine Imprägnierung des Substrats mit Nanokomposit, eine Einlagerung des Substrats in eine Matrix aus Nanokomposit oder eine Verklebung bzw. Verbindung von Substraten bzw. Substratteilen mit Nanokomposit. Unter "Beschichtung" wird insbesondere eine teilweise oder vollständige Umhüllung eines Substrats mit einem Nanokomposit verstanden, um diesem Substrat oder Teilen davon besondere Eigenschaften zu verleihen, wie z.B. Oxidationsbeständigkeit, Flammverzögerung, Hydrophobie, Oleophobie, Härte, Undurchlässigkeit, elektrische oder thermische Isolation.

Die folgenden Beispiele sollen die vorliegende Erfindung weiter erläutern. In den Beispielen handelt es sich bei dem darin eingesetzten Kieselsol um ein wäßriges Kieselsol der Firma BAYER ("Levasil 300/30") mit einem Feststoffgehalt von 30 Masse-% und einer Teilchengröße von 7 bis 10 nm. Weiter werden in den Beispielen die folgenden Abkürzungen verwendet:
- MTEOS =: Methyltriethoxysilan
- TEOS =: Tetraethoxysilan
- PTEOS =: Phenyltriethoxysilan.

### BEISPIEL 1

Eine Mischung aus 65 Mol-% MTEOS, 15 Mol-% PTEOS und 20 Mol% TEOS (oder alternativ aus 80 Mol-% MTEOS und 20 Mol-% TEOS) wird mit Kieselsol und Salzsäure als Katalysator stark gerührt, um durch Hydrolyse und Kondensation der Silane ein Nanokomposit-Sol herzustellen. Durch das Kieselsol wird dabei soviel Wasser eingebracht, daß pro Mol hydrolysierbarer Gruppe 0,8 Mol Wasser vorhanden sind. Ca. 5 Minuten nach der Herstellung wird das Sol mit obigen Silanmischung aufgefüllt, so daß der Gesamtwassergehalt der resultierenden Mischung 0,4 Mol Wasser pro Mol Alkoxygruppen beträgt. Der Kieselsolanteil am Gesamtfeststoffgehalt beträgt ca. 14 Masse-%.

Nach einer Nachreaktionsphase von ca. 12 Stunden bei Raumtemperatur wird der obigen Mischung soviel Wasser zugesetzt, daß der Gesamtwassergehalt des Sols bei 0,5 Mol Wasser pro Mol Alkoxygruppen liegt. Nach ca. 5 Minuten ist die Mischung einsatzbereit.

Die einsatzbereite Mischung wird durch einen Sprühring auf angefeuchtete Glaswolle aufgesprüht und ca. 5 bis 10 Minuten im Umluftofen bei etwa 200°C ausgehärtet. Man erhält einen elastischen Dämmstoff mit stark verbessertem Brandverhalten im Vergleich zu Phenolharz-gebundener Glaswolle.

### BEISPIEL 2

68,7 ml MTEOS (entsprechend 80 Stoffmengen-%) und 19,2 ml TEOS (entsprechend 20 Stoffmengen-%) werden gemischt und die Hälfte dieser Mischung wird mit 11,7 ml Kieselsol (entsprechend 14,3 Masse-% Kieselsolanteil) und 0,386 ml konzentrierter Salzsäure stark gerührt. Nach 5 Minuten wird die zweite Hälfte der Silanmischung zu dem Ansatz gegeben, worauf noch 5 Minuten weiter gerührt wird. Anschließend wird das entstandene Sol einem Nachreaktionsschritt (2-stündiges Stehenlassen bei Raumtemperatur) unterzogen. Man erhält ein lagerfähiges Vorkondensat mit einem SiO₂-Feststoffgehalt von etwa 300 g/l und 0,4 Mol Wasser pro Mol hydrolysierbarer Gruppe. Durch Aufkonzentrieren am Rotationsverdampfer wird der Feststoffgehalt auf 60 Masse-% eingestellt.

Vor der Anwendung werden dem Bindemittel noch 3,0 ml Titanisopropylat und ca. 2,5 ml Wasser zugesetzt, um auf einen Wassergehalt von 0,5 Mol Wasser pro Mol hydrolysierbarer Gruppe zu kommen. Die so hergestellte Mischung wird mit Holzspänen vermischt, so daß 15% der Masse aus SiO₂ bestehen. Anschließend wird die Masse in einer Heißpresse bei 180°C 10 Minuten lang zu einem Formkörper verbunden. Man erhält einen Formkörper, der einer herkömmlichen Preßspanplatte ähnelt, aber ohne organisches Bindemittel hergestellt ist. Das Brandverhalten einer solchen Platte ist gegenüber demjenigen einer herkömmlichen Preßspanplatte wesentlich verbessert.

### BEISPIEL 3

### 1. Herstellung des Sols

172 ml MTEOS werden mit 48 ml ml TEOS gemischt. Unter starkem Rühren werden 29 ml Kieselsol und 2 ml Schwefelsäure (35%) zugegeben. Nach ca. 5 Minuten hat sich ein opakes Sol gebildet, das man 4 Stunden bei Raumtemperatur nachreagieren läßt. Nach Zugabe von weiteren 3 ml Wasser unter Rühren ist die Mischung nach ca. 5 Minuten einsatzbereit.

### 2. Anwendung des Sols

**2.1** 100 g Holzspäne werden mit 60 ml Sol vermischt und bei einem Druck von 7,1 MPa in einer Preßform mit einem Durchmesser von 12 cm 10 Minuten lang verpreßt. Anschließend wird der Preßling in einer heizbaren Presse (unterer und oberer Preßteller beheizt) bei einem Druck von 2,6 MPa und einer Temperatur von 100°C ca. 3 Stunden lang gepreßt. Man erhält einen mechanisch stabilen Formkörper mit einem Holzspäne-Anteil von 82 Masse-%.

**2.2** 300 g Steinwollgranulat werden mit 10 ml des obigen Sols vermischt und bei einem Druck von 4,4 MPa in einer Preßform mit einem Durchmesser von 12 cm 5 Minuten verpreßt. Anschließend wird der Preßling in einem Umluft-Trockenschrank 8 Stunden lang einer Temperatur von 80°C ausgesetzt. Man erhält einen mechanisch stabilen Formkörper mit einem Gehalt an Bindemittel von 1 Masse-%.

## Patentansprüche

1. Verbundwerkstoff, gekennzeichnet durch ein Substrat auf Basis von Glasfasern, Mineralfasern oder Holzwerkstoffen und ein damit in funktionellem Kontakt stehendes Nanokomposit, das erhältlich ist durch Oberflächenmodifizierung von
a) kolloidalen anorganischen Partikeln mit
b) einem oder mehreren Silanen der allgemeinen Formel (I)
Rₓ-Si-A₄₋ₓ (I)
worin die Reste A gleich oder verschieden sind und Hydroxylgruppen oder hydrolytisch abspaltbare Gruppen darstellen, ausgenommen Methoxy, die Reste R gleich oder verschieden sind und hydrolytisch nicht abspaltbare Gruppen darstellen und x den Wert 0, 1, 2 oder 3 hat, wobei bei mindestens 50 Stoffmengen-% der Silane x ≥ 1 ist;
unter den Bedingungen des Sol-Gel-Prozesses mit einer unterstöchiometrischen Wassermenge, bezogen auf die vorhandenen hydrolysierbaren Gruppen, unter Bildung eines Nanokomposit-Sols, gegebenenfalls weitere Hydrolyse und Kondensation des Nanokomposit-Sols vor dem Inkontaktbringen mit dem Substrat und anschließende Härtung.

2. Verbundwerkstoff nach Anspruch 1, dadurch gekennzeichnet, daß die Oberflächenmodifizierung in Gegenwart eines sauren Kondensationskatalysators bei einem pH-Wert von 1 bis 2 durchgeführt worden ist.

3. Verbundwerkstoff nach Anspruch 1 oder 2, dadurch gekennzeichnet, daß das Nanokomposit-Sol einer mehrstündigen bis mehrtägigen Nachreaktion bei Temperaturen von Raumtemperatur bis 120°C unterzogen worden ist.

4. Verbundwerkstoff nach einem der Ansprüche 1 bis 3, dadurch gekennzeichnet, daß die kolloidalen anorganischen Partikel (a) ausgewählt sind aus Solen und nanoskaligen, dispergierbaren Pulvern von SiO₂, TiO₂, ZrO₂, Al₂O₃, Y₂O₃, CeO₂, SnO₂, ZnO, Eisenoxiden oder Kohlenstoff.

5. Verbundwerkstoff nach einem der Ansprüche 1 bis 4, dadurch gekennzeichnet, daß zur Herstellung des Nanokomposit-Sols andere Zusatzstoffe (c) aus der Gruppe von Härtungskatalysatoren, organische Bindemittel, Pigmente, Farbstoffe, flammhemmende Zusätze, Verbindungen glasbildender Elemente, Korrosionsschutzmittel und/oder Beschichtungshilfsmittel verwendet worden sind.

6. Verbundwerkstoff nach einem der Ansprüche 1 bis 5, dadurch gekennzeichnet, daß 5 bis 60 Masse-% der Komponente (a) zur Herstellung des Nanokomposits eingesetzt worden sind.

7. Verbundwerkstoff nach einem der Ansprüche 1 bis 6, dadurch gekennzeichnet, daß 20 bis 95 Masse-% der Komponente (b), ausgedrückt als Polysiloxan der Formel: RₓSiO_{(2-0,5x)}, zur Herstellung des Nanokomposits eingesetzt worden sind.

8. Verbundwerkstoff nach einem der Ansprüche 5 bis 7, dadurch gekennzeichnet, daß nicht mehr als 20 Masse-% der anderen Zusatzstoffe (c) zur Herstellung des Nanokomposits eingesetzt worden sind.

9. Verbundwerkstoff nach einem der Ansprüche 1 bis 8, dadurch gekennzeichnet, daß die Reste A in Formel (I) C₂₋₄-Alkoxygruppen sind.

10. Verbundwerkstoff nach einem der Ansprüche 1 bis 9, dadurch gekennzeichnet, daß R in Formel (I) für eine gegebenenfalls substituierte C₁₋₄-Alkylgruppe und/oder eine gegebenenfalls substituierte C₆₋₁₀-Arylgruppe, vorzugsweise eine Methyl-, Ethyl- und/oder Phenylgruppe, steht.

11. Verbundwerkstoff nach einem der Ansprüche 1 bis 10, dadurch gekennzeichnet, daß x in Formel (I) den Wert 0, 1 oder 2 hat.

12. Verbundwerkstoff nach einem der Ansprüche 1 bis 11, dadurch gekennzeichnet, daß mindestens 60 Stoffmengen-% der Komponente (b) Silane der Formel (I) mit x≥1 sind.

13. Verbundwerkstoff nach einem der Ansprüche 1 bis 12, dadurch gekennzeichnet, daß die Oberflächenmodifizierung mit 0,1 bis 0,9 Mol Wasser pro Mol der vorhandenen hydrolysierbaren Gruppen durchgeführt worden ist.

14. Verbundwerkstoff nach einem der Ansprüche 1 bis 13, dadurch gekennzeichnet, daß der Masseanteil des Nanokomposits 0,1 bis 80 Masse-%, beträgt.

15. Verbundwerkstoff nach einem der Ansprüche 1 bis 14, dadurch gekennzeichnet, daß die Härtung thermisch, erfolgt.

16. Verbundwerkstoff nach einem der Ansprüche 1 bis 15 in Form eines mit dem Nanokomposit beschichteten Substrats, eines mit dem Nanokomposit imprägnierten Gewebes oder eines ein mit dem Nanokomposit konsolidiertes Substratmaterial umfassenden Formkörpers.

17. Verwendung eines wie in den Ansprüchen 1 bis 13 definierten Nanokomposits zur Beschichtung und/oder Konsolidierung von Substraten auf Basis von Glasfasern, Mineralfasern oder Holzwerkstoffen.

## Claims

1. Composite material, characterized by a substrate based on glass fibers, mineral fibers or derived timber products and by a nanocomposite which is in functional contact with said substrate and is obtainable by surface modification of
a) colloidal inorganic particles with
b) one or more silanes of the general formula (I)
Rₓ-Si-A₄₋ₓ (I)
where the radicals A are identical or different and are hydroxyl groups or groups which can be removed hydrolytically, except methoxy, the radicals R are identical or different and are groups which cannot be removed hydrolytically and x is 0, 1, 2 or 3, where x ≥ 1 in at least 50 mol% of the silanes;
under the conditions of the sol-gel process with a below-stoichiometric amount of water, based on the hydrolysable groups which are present, with formation of a nanocomposite sol, and further hydrolysis and condensation of the nanocomposite sol, if desired, before it is brought into contact with the substrate, followed by curing.

2. Composite material according to Claim 1, characterized in that the surface modification has been carried out in the presence of an acid condensation catalyst at a pH of from 1 to 2.

3. Composite material according to Claim 1 or 2, characterized in that the nanocomposite sol has been subjected, over a period of from a number of hours to a number of days, to a post-reaction at temperatures from room temperature to 120°C.

4. Composite material according to any one of Claims 1 to 3, characterized in that the colloidal inorganic particles (a) are selected from the group consisting of sols and dispersible powders of nano-scaled SiO₂, TiO₂, ZrO₂, Al₂O₃, Y₂O₃, CeO₂, SnO₂, ZnO, iron oxides or carbon.

5. Composite material according to any one of Claims 1 to 4, characterized in that, for preparing the nanocomposite sol, other additives (c) selected from the group consisting of curing catalysts, organic binders, pigments, dyes, flame retardants, compounds of glass-forming elements, anti-corrosion agents and/or coating aids have been used.

6. Composite material according to any one of Claims 1 to 5, characterized in that from 5 to 60% by weight of component (a) have been employed for preparing the nanocomposite.

7. Composite material according to any one of Claims 1 to 6, characterized in that from 20 to 95% by weight of component (b), expressed as polysiloxane of the formula: RₓSiO_{(2-0.5x)} have been employed for preparing the nanocomposite.

8. Composite material according to any one of Claims 5 to 7, characterized in that not more than 20% by weight of the other additives (c) have been employed for preparing the nanocomposite.

9. Composite material according to any one of Claims 1 to 8, characterized in that the radicals A in formula (I) are C₂₋₄-alkoxy groups.

10. Composite material according to any one of Claims 1 to 9, characterized in that R in formula (I) is an unsubstituted or substituted C₁₋₄-alkyl group and/or a substituted or unsubstituted C₆₋₁₀-aryl group, preferably a methyl, ethyl and/or phenyl group.

11. Composite material according to any one of Claims 1 to 10, characterized in that x in formula (I) is 0, 1 or 2.

12. Composite material according to any one of Claims 1 to 11, characterized in that at least 60 mol% of component (b) is silanes of the formula (I) where x ≥ 1.

13. Composite material according to any one of Claims 1 to 12, characterized in that the surface modification has been carried out using from 0.1 to 0.9 mol of water per mole of hydrolysable groups which are present.

14. Composite material according to any one of Claims 1 to 13, characterized in that the proportion by weight of the nanocomposite is from 0.1 to 80% by weight.

15. Composite material according to any one of Claims 1 to 14, characterized in that the curing is carried out thermally.

16. Composite material according to any one of Claims 1 to 15 in the form of a substrate coated with the nanocomposite, a fabric impregnated with the nanocomposite or a shaped article comprising a substrate material consolidated with the nanocomposite.

17. Use of a nanocomposite as defined in Claims 1 to 13 for coating and/or consolidation of substrates based on glass fibers, mineral fibers or derived timber products.

## Revendications

1. Matériau composite, caractérisé par le fait qu'il comprend un substrat à base de fibres de verre, de fibres minérales ou de matériaux ligneux et, en contact fonctionnel avec celui-ci, un nanocomposite que l'on peut obtenir par modification en surface surface
a) de particules inorganiques colloïdales avec
b) un ou plusieurs silanes correspondant à la formule générale (I)
(I) Rₓ-Si-A₄₋ₓ
dans laquelle les résidus A, identiques ou différents, représentent des groupes hydroxyle ou des groupes hydrolysables, excepté un groupe méthoxy, les résidus R, identiques ou différents, représentent des groupes non hydrolysables, et x vaut 0, 1, 2 ou 3, x étant supérieur ou égal à 1 pour au moins 50 % des silanes,
dans les conditions d'un procédé sol-gel avec une quantité d'eau sous-stoechiométrique par rapport au nombre de groupes hydrolysables présents, avec formation d'un sol nanocomposite, éventuellement hydrolyse supplémentaire et condensation du sol nanocomposite, avant mise en contact avec le substrat, suivie du durcissement.

2. Matériau composite selon la revendication 1, caractérisé par le fait que la modification en surface se fait en présence d'un catalyseur de condensation acide à un pH compris entre 1 et 2.

3. Matériau composite selon la revendication 1 ou 2, caractérisé par le fait que le sol nanocomposite subit une post-réaction allant de plusieurs heures à plusieurs jours, à une température comprise entre la température ambiante et 120 °C.

4. Matériau composite selon une des revendications 1 à 3, caractérisé par le fait que les particules inorganiques colloïdales (a) sont choisies parmi des sols et des poudres nanométriques dispersibles de SiO₂, TiO₂, ZrO₂, Al₂O₃, Y₂O₃, CeO₂, SnO₂, ZnO, oxyde de fer ou carbone.

5. Matériau composite selon une des revendications 1 à 4, caractérisé par le fait que l'on utilise pour la préparation du sol nanocomposite d'autres additifs (c) choisis dans le groupe formé par des catalyseurs de durcissement, des liants organiques, des pigments, des colorants, des additifs ignifugeants, des composés d'éléments vitrifiables, des agents anti-corrosion et/ou des adjuvants de revêtement.

6. Matériau composite selon une des revendications 1 à 5, caractérisé par le fait que l'on utilise, pour la préparation du nanocomposite, de 5 à 60 % en poids de composant (a).

7. Matériau composite selon une des revendications 1 à 6, caractérisé par le fait que l'on utilise, pour la préparation du nanocomposite, de 20 à 95 % en poids de composant (b), exprimé comme polysiloxane de formule RₓSiO_{(2.0,5x)}.

8. Matériau composite selon une des revendications 5 à 7, caractérisé par le fait que l'on n'utilise, pour la fabrication du nanocomposite, pas plus de 20 % en poids d'autres additifs (c).

9. Matériau composite selon une des revendications 1 à 8, caractérisé par le fait que les résidus A dans la formule (I) représentent des groupes alcoxy en C₂₋₄.

10. Matériau composite selon une des revendications 1 à 9, caractérisé par le fait que R dans la formule (I) représente un groupe alkyle en C₁₋₄, éventuellement substitué, et/ou un groupe aryle en C₆₋₁₀, éventuellement substitué, de préférence un groupe méthyle, éthyle et/ou phényle.

11. Matériau composite selon une des revendications 1 à 10, caractérisé par le fait que x dans la formule (I) vaut 0, 1 ou 2.

12. Matériau composite selon une des revendications 1 à 11, caractérisé par le fait qu'au moins 60 % du composant (b) sont des silanes de formule (I) avec x ≥ 1.

13. Matériau composite selon une des revendications 1 à 12, caractérisé par le fait que la modification en surface se fait avec 0,1 à 0,9 moles d'eau par mole de groupes hydrolysables présents.

14. Matériau composite selon une des revendications 1 à 13, caractérisé par le fait que la fraction pondérale du nanocomposite est comprise entre 0,1 et 80 % en poids.

15. Matériau composite selon une des revendications 1 à 14, caractérisé par le fait que le durcissement se fait par chauffage.

16. Matériau composite selon une des revendications 1 à 15 sous la forme d'un substrat revêtu du nanocomposite, d'un tissu imprégné avec le nanocomposite ou d'un article moulé comprenant un matériau substrat consolidé avec le nanocomposite.

17. Utilisation d'un nanocomposite défini dans les revendications 1 à 13 pour le revêtement et/ou la consolidation de substrats à base de fibres de verre, de fibres minérales ou de matériaux ligneux.
